# EUROPEAN PATENT SPECIFICATION

(11) **EP 4 265 951 B1**
(45) Date of publication and mention of the grant of the patent: **22.10.2025**
(21) Application number: 22214587.2
(22) Date of filing: 19.12.2022
(51) Int. Cl.: F16L 37/06, F16L 37/56, F16L 37/62, F16L 39/02

(54) **DEVICE FOR CONNECTING PIPES AND/OR ELECTRICAL CONNECTIONS UNDER BLOWDOWN CONDITIONS**
VORRICHTUNG ZUM VERBINDEN VON ROHREN UND/ODER ELEKTRISCHEN VERBINDUNGEN UNTER PANNENBEDINGUNGEN
DISPOSITIF DE RACCORDEMENT DE TUYAUX ET/OU DE CONNEXIONS ÉLECTRIQUES DANS DES CONDITIONS DE SOUFFLAGE

(30) Priority: 21.04.2022 IT 202200007874
(43) Date of publication of application: 25.10.2023
(73) Proprietor: Italmatic Presse e Stampi Srl, 20122 Milano (IT)
(72) Inventor: Mariani, Stefano, 55031 Camporgiano (IT); Brisighelli, Carlo, 55051 Barga (IT)
(74) Representative: Emmi, Mario

(56) References cited:
- EP-A2- 2 912 361
- EP-A2- 3 131 809

## Description

### Scope of the invention

The present invention relates to the technical area of joints, particularly, but not limited to, to the field of tyre production.

In particular, the invention relates to a joint system for connecting pipes and/or electrical connections under blowdown conditions.

More specifically, the invention relates to a particular joint system for the connection of pipes (e.g. operating under pressurized or blown down conditions) and/or electrical power and/or control connections, the principle of inserting and maintaining the connection of which is based on the creation of a blowdown within a chamber containing the coupling joints, thus causing a pressure drop (or delta) between the outside of the chamber and the chamber itself, and therefore generating a coupling force.

### Brief references to the prior art

Joints have been known for a very long time and are used in many different industries.

They serve to connect two parts to each other, and generally involve a first element that couples with a second element, thus creating communication (e.g. fluid, but of another kind as well, e.g. electrical) between said two parts.

For example, a solution may involve a first element that is a male element penetrating a second element also known as a female element.

Joints are also said to be 'quick' when the connection between them allows for a quick-locking coupling, e.g. an automatic snap-lock via elastic systems in general or other generally known quick-locking mechanisms.

Quick joints can then be single or multiple.

The single joint, as its very nomenclature states, connects a single pathway, e.g. fluidic, with a second pathway, e.g. fluidic, as mentioned. Said single joint comprises therefore first and second single elements that are coupled together and held in position by mechanical means, e.g. by a ring nut.

In accordance with this type of solution, it is clearly necessary that an operator tighten the ring nut joining the two elements together.

The single joint can be of the automatic type where an external element, e.g. an actuator, ensures that the two parts forming the joint are joined and held together.

Based on this concept, multiple joints are also known that comprise a support matrix where multiple joints (i.e. a plurality of joints or one to several joints) are arranged.

Notably, a first matrix support is provided supporting a plurality of joints e.g. male joints and a second matrix support supporting in its turn a plurality of joints e.g. female joints.

Thus, by coupling the two matrix supports together, a multi-way connection, such as fluidic or other connections, such as electrical, between the two parts is achieved.

The coupling, i.e. the insertion force and retention, is generally provided by a screw or lever system or by external means such as a hydraulic pusher.

These types of joint, including the matrix type as mentioned, are used in many technical fields and for the most diverse applications.

Examples include previous publications such as US3640552 in which a coupling between two pipe fittings is facilitated by a pressure or blowdown condition.

Other publications are further known such as US2021348360, IT1097793, US2022034436 and US2020248856.

It should be added here that one of the technical fields of interest may, for example, relate to the production and/or retreading of tyres.

More specifically, in the field of tyre production, a tyre retreading process using autoclaving and vulcanisation is known.

In the vulcanisation step, the tyre must be placed in an autoclave in which a controlled pressure and temperature cycle is generated.

In particular, the tyre that has been stripped of its worn tread must be provided with a new tread, which, in an annular form, wraps around the circular body of the wheel and must be adhered to it.

The autoclave is generally in the form of a large cylinder resting on special supports and with its longitudinal axis parallel to the ground.

It therefore forms a kind of a duct-like chamber inside which the support structures for hanging the tyres that are to undergo the vulcanisation process in question are found.

A front door allows the vulcanisation chamber to be opened/closed to enable entry and/or exit of said tyres.

The autoclave itself is well known in the state of the art and is not an object of the present invention.

In the tyre retreading process, in order to keep the new tread in perfect adherence to the casing, the tyre with the new tread is wrapped with a casing (also called an '*Envelope*' or liner) inside which a blowdown is created so that the thrust generated by the pressure difference between the outside of the envelope and its inside generates the force required to ensure perfect adhesion of the parts (tread to original wheel) during the vulcanisation process. Essentially, it would be like putting the tyre under vacuum in a casing that is then, in its turn, subjected to high pressure.

During the vulcanisation process, the pressure value inside the tyre sheath will therefore always be lower than the pressure value inside the autoclave in order to guarantee a crushing force that ensures perfect adhesion between the parts.

Precisely in order to ensure that the vulcanisation process is effective, it is necessary to connect said sheath individually to the vacuum pump and monitor the pressure throughout the cycle.

It goes without saying that in this specific technical field of rubber vulcanisation, particularly in tyre retreading, any loss of 'blowdown condition' within the liner can lead to a vulcanisation failure as the pressure acting on the tyre placed in the vulcanisation chamber would no longer reach the value required for adhesion. This would imply the realization of a product that must be discarded or, worse still, non-compliant and therefore unsafe.

In the retreading process, the tyres are not cured individually, but in groups, and they are generally hung consistently spaced on a support beam that enters the autoclave. On this support beam are numerous connecting pipes that run between one end of the beam and the individual positions where the tyres under process are located.

Each of the liners is connected in advance to the end of the aforementioned pipes by flexible means equipped with manually operated quick couplings.

This operation must necessarily take place outside the autoclave as the space within is not sufficient to carry it out.

The opposite end of this pipe bundle, which is located near the head of the beam, must in turn be connected to the blowdown system after the beam assembly and the tyres suspended from it have been placed inside the autoclave.

This connection can be made using single quick couplings, each of which must be connected manually by the operator, or using multiple matrix connectors; this allows several fluidic routes to be connected together in a single operation, in both cases this is done manually.

In these cases, the end of the pipes on the support beam is found on the door side to allow the operator to complete the connection while standing outside the autoclave.

In another known technique, the end of the beam carrying a multiple matrix joint is located on the inner side of the autoclave. A mechanical system generally consisting of a hydraulic drive allows the coupling of the female multiple joint with the male multiple joint without the need for operator intervention.

The technique of connecting individual quick couplings has two negative aspects: in addition to the time required to complete the connection, great care is required on the part of the operator in correctly connecting the different pipes. Any error results in the loss of traceability of the process.

The manual multiple joint matrix connection technique ensures the correct connection but still involves a loss of operator time.

The last illustrated technique consisting of a multiple coupling matrix with automatic insertion does not present any of the problems listed above, but in its implementation aspects it involves the use of complex mechanical systems that are not always reliable due to the exposure of the mechanical system and the individual components of the coupling matrix to the pressure and temperature cycles within the autoclave.

Although it was ideally the best solution, it did not achieve the deserved development due to mechanical complexity and low reliability.

In all cases, however, the coupling requires precision and, as mentioned, tightness is not guaranteed, especially if misalignments occur over time.

Finally, publication WO2015159191A1 is also known.

### Summary of the invention

It is therefore an aim of the present invention to provide a joint system according to the technical features of claim 1 and the use of a blowdown or vacuum condition in this joint system according to claim 15, which solves the aforementioned technical drawbacks. Advantageous embodiments of the invention are defined in the dependent claims.

In particular, it is the purpose of the present invention to provide a joint system that allows for fast, accurate and long-lasting coupling.

These and other purposes are achieved with the joint system, preferably for tyre production and/or retreading, in accordance with claim 1.

Such a joint system comprises at least one (18', 18'') male and at least one (28', 28'') female matrix support.

The matrix support is therefore the structure that supports (in particular encompasses and supports) one or more joints.

Thus, the male matrix support comprises at least one joint (19) (preferably a plurality of joints) and the female matrix support comprises at least one complementary joint (29) (preferably a plurality of complementary joints) adapted to couple with the joint (19) of the male matrix support.

The male matrix support is thus configured to couple with the female matrix support such that following said coupling the at least one joint (19) (or plurality of joints) provided in said male matrix support connects to the at least one complementary joint (29) (or plurality of complementary joints) provided in said female matrix support.

In accordance with the invention:
- Said male matrix support comprises at least one body (18', 18") of material, preferably rising from a surface (16);
- And wherein in said body (18', 18'') of material said one or more joints (19) are provided;
- Said female matrix support, preferably having a cup-type shape, forming a receiving volume (23) that serves to accommodate the male matrix support.

Said receiving volume is bounded by at least one sidewall (22) and a base (24), the base (24) providing one or more holes facing the receiving volume (23) and within which said one or more complementary joints (29) are arranged adapted to connect, each one, with a relative said joint (19) of the male matrix support.

In accordance with this configuration, following insertion of the body (18', 18'') into the receiving volume (23), a fluid-tight closed chamber (30) is generated.

In accordance with the invention means (25) are comprised adapted to generate, in said chamber (30), a blowdown (P0) or vacuum (P0) condition such that a coupling force (also referred to as an attractive force) is generated which leads said body (18', 18'') to penetrate the receiving volume (23) to the point where the joints connect to each other.

In particular, said means (25) make it possible to create a desired pressure value (P0) inside the chamber (30) such that a pressure drop is generated between the pressure (P0) in the chamber (30) and the pressure (p1) in the external environment (immediate surroundings) where the two matrix supports to be coupled are immersed, thus creating a coupling force between them.

Thus, the pressure difference between exterior and interior (i.e. between outside the chamber and the chamber) creates a force such that the joints in the male matrix support automatically couple with the complementary joints in the female matrix support by overcoming the repulsive force and/or friction present of the joints.

In this way, all the aforementioned technical drawbacks are solved.

In particular, a quick connection is obtained as the two parts tend to 'attract' each other once such a distance has been reached that a chamber 30 is formed and thus such a distance in which the blowdown created by the vacuum system (i.e. by said means 25) inside the chamber takes effect.

The coupling therefore occurs 'automatically' and precisely without the need for external mechanical actuators required to overcome and maintain the repulsive elastic force of the individual joints.

The shape of the joint and the centring devices guarantee certainty of alignment of the individual joints of which the system is comprised.

As a result, there is a certainty of alignment.

For example, in the specific field of vulcanisation, and in particular in tyre tread regeneration, the blowdown created inside chamber 30, and which is maintained throughout the entire work cycle, also results in leak protection.

In fact, the pressure range (i.e. the drop or 'delta' as it may be) between the blowdown within the fluidic pathways and the blowdown in chamber 30 containing the individual joints is now limited.

In particular, during a manufacturing process, e.g. vulcanisation, the autoclave environment can reach high pressures while chamber 30 remains at blowdown comparable to the blowdown inside the pipes. Thus, a certain 'pressure delta' between the exterior and chamber 30 is achieved that allows for effective coupling and, at the same time, pressure 'delta_1', which is precisely the pressure difference between the pipes to which the joints are connected and chamber 30, is very small, thus reducing leakage.

By monitoring the blowdown inside the chamber containing the joints, it is possible to check throughout the cycle that the coupling is correct and that there are no blowdown leaks that could affect vulcanisation quality.

Advantageously, such a female matrix support thus comprises a body (24', 24'') rising from a surface (26) and having an upper surface (24), also called 'base' 24 in this description.

This upper surface (or base, as it may be) generates the bottom of the cup of said female matrix support within which said complementary joints are inserted.

Advantageously in said body (24', 24'') said one or more complementary joints (29) are therefore arranged.

Advantageously, said means adapted to enable generation of a blowdown or vacuum condition in said chamber (30) include at least one duct (25) which faces into said chamber (30) and through which said blowdown or vacuum condition can be generated.

For instance, advantageously, said means further comprise a device adapted to enable generation of a blowdown or vacuum condition and adapted to connect to said at least one duct (25), e.g. a vacuum pump or suction system in general.

Such blowdown-generating devices are in themselves known.

Advantageously, as mentioned, said chamber (30) is sealed during the final step of approach and throughout the duration of the coupling.

In this way, advantageously, leakage of fluid outside chamber 30 is avoided or minimized, thus allowing the pressure value created within to be maintained.

Advantageously, said female matrix support has a cup-like shape to form said receiving volume 23.

The cup therefore has a base 24 and a sidewall 22, preferably cylindrical.

Advantageously, the body (18', 18'') includes at least one annular seal arranged around the perimeter of the body contacting the sidewall (22) in the penetration step, so that any leakage is avoided or minimized.

Advantageously, the body (18', 18") rises from a plate (16) to which it connects.

Advantageously, the sidewalls (22) rise from a plate (26).

Advantageously, the body (18', 18'') is cylindrical and the female matrix support, preferably cup-shaped, forms a cylindrical receiving volume to receive the cylindrical body (18', 18'').

Advantageously, the base (24) coincides with the upper surface of the body (24', 24'') within which one or more complementary joints are arranged.

Advantageously, in said body (24', 24'') at least one duct (25) is obtained.

Advantageously, said chamber (30) is bounded at least by the front surface (14) of the body (18', 18"), by said base (24) and by a sidewall (22).

Basically, the body (18', 18'') that penetrates the receiving volume (23) forms a plug in it, causing the formation of the sealed chamber (30).

Advantageously, said male and female joints are joints that connect a fluid pathway.

Alternatively, in an advantageous manner, said male and female joints connect a hydraulic line or an electrical signal line or a power line.

It is also an aim of the present invention to provide a method according to claim 14, the method comprising the following steps:
- Arranging at least one male matrix support (18', 18'') comprising at least one body (18', 18'') of material, preferably rising from a surface (16);
- And wherein in said body (18', 18'') of material one or more joints (19) are inserted;
- The provision of at least one female matrix support, preferably having a cup-like shape, forming a receiving volume (23) adapted to receive said body (18', 18') during the coupling step, said receiving volume being bounded by sidewalls (22) and a base (24), said base (24) providing one or more holes facing the receiving volume (23) and within which one or more complementary joints (29) are provided adapted to connect, each one, with a relative said joint (19) of the male matrix support, when said body (18', 18") penetrates the receiving volume (23) of the cup;
- And wherein the method involves the steps of:
- Penetration of the body (18', 18'') into the receiving volume (23) in such a way as to cause, following said penetration, the formation of a fluid-tight closed chamber (30);
- The method providing the generation of a blowdown or vacuum condition in said chamber (30) in such a way as to create a force that causes the complete penetration of the body (18', 18'') into the receiving volume until said joints couple together.
- In particular, a pressure condition P0 is created in chamber (30) which is lower than the pressure P1 in the external environment where the two coupling matrix supports are immersed, i.e. chamber 30 is set at a lower pressure value than the external environment.

Advantageously, because of such a blowdown or vacuum and thus of such a pressure delta between outside the chamber and the chamber, a coupling force is generated that overcomes the repulsive elastic force created by the mating bodies.

Advantageously, said chamber (30) is bounded by the front surface (14) of the body (18', 18'') facing towards the base (24), by said base (24) and by a sidewall (22).

Advantageously, said vacuum or blowdown is obtained by connecting chamber (30) to a vacuum or blowdown device, e.g. a vacuum pump, via a conduit that penetrates chamber (30) from the outside.

Advantageously, chamber (30) is sealed or substantially sealed, hence fluid-tight.

Advantageously, the joints connect a fluid line and thus a line for liquid or gas, preferably a gas such as air.

A method, not part of the current invention, for regenerating a tyre tread is also herein described, which includes the steps of:
- Applying a tread around the body of a tyre;
- Applying a casing that wraps the tyre with the tread applied around it;
- Placing in an autoclave for vulcanisation;
- And wherein the casing is placed in a blowdown condition with respect to the pressure inside the autoclave to perform a vulcanisation process;
- And wherein said creation of a blowdown condition is achieved by providing the casing with a matrix support e.g. male (or female) as previously described and connecting it to a female (or male) matrix support as previously described and converging to a vacuum system;
- Generating blowdown through said vacuum system, e.g. a vacuum pump;
- The coupling between said matrix supports also occurring by exploiting a pressure drop condition that is generated between the autoclave environment and the pressure state of chamber 30.

The use of the joint system introduced above in a procedure for regenerating a wheel tread or for creating a wheel from scratch is therefore also described herein.

It is also described how to combine an autoclave with a joint system according to one or more of the described features.

In particular, advantageously, at least one male or female matrix support of those described is placed inside the autoclave (preferably at the bottom of the autoclave) and the other support is placed on the beam from which all tyres are hung (preferably at the end of the beam).

This beam is then slid into the autoclave until the male support is brought into juxtaposition with the female support so that the vacuum completes the coupling between the joints, as described.

### Brief description of the drawings

The invention, in one or more of its embodiments, will be detailed in accordance with the following drawings:
- Figure 1 shows an axonometric view of a matrix joint system in accordance with the invention;
- Figure 2 and Figure 3 show further axonometric views of a matrix joint system in accordance with the invention;
- Figures 4 through 7 show, in view and in the corresponding longitudinal B-B section, the approach and closing steps of the first matrix support, comprising a plurality of first joints, which couples with the second matrix support comprising a plurality of second joints; The coupling causes the formation of a chamber 30 where a pressure condition P0 is created, which is at a lower value than the external pressure P1 (thus P1 > P0), thereby creating a pressure drop between the chamber and the external pressure whereby a coupling force between the two matrix supports is established;
- Figures 8 through 10 correspond to Figures 4 through 7 but in axonometric view of the section;
- Figure 11 is an overall view of the autoclave incorporating the described system and shows the female matrix support inside the autoclave and which is intended to couple with the male matrix support arranged on the end of the beam when the beam is fully inserted into the autoclave;

### Detailed description of some invention configurations

It is an object of the present invention to provide a joint system comprising at least one male matrix support (18', 18'') and at least one female matrix support (28', 28"), the male matrix support comprising at least one joint (19) and the female matrix support comprising at least one complementary joint (29) adapted to couple to the joint (19) of the male matrix support.

Said male matrix support is configured to couple with the female matrix support such that following said coupling the at least one joint (19) provided in said male matrix support connects to the at least one complementary joint (29) provided in said female matrix support.

The coupling between the male matrix support and the female matrix support is such as to cause the formation of a sealed chamber (30), preferably fluid-tight (i.e. preventing leakage of fluids such as gases and/or liquids).

In particular, the initial step of penetration results in the formation of a chamber (30), which obviously reduces its volume as penetration progresses until the joints connect with the complementary joints.

More specifically, such a joint connection position is one in which the residual volume of said chamber 30 is at a minimum, for example the volume is zero or almost zero.

In accordance with the invention, chamber 30 is maintained at a blowdown or vacuum condition such that an attractive force is generated which causes said body (18', 18'') to penetrate the receiving volume (23), bringing the joints of the male matrix support into connection with the complementary joints of the female matrix support.

This condition is maintained throughout the joining interval, ensuring a firm bond.

In brief, a pressure differential is created between chamber 30 and the external environment - surrounding said chamber.

More particularly, said male matrix support may comprise at least one body (18', 18'') of material (preferably with said body rising from a surface (16)) and wherein said body (18', 18'') of material is provided with said one or more joints (19);

On the other hand, said female matrix support forms a receiving volume (23) bounded by at least one sidewall (22) and at least one base (24).

For example, the female matrix support may have a cup-like shape to form this receiving volume.

In the receiving volume (23), said one or more complementary joints (29) are arranged adapted, each one, to connect with a corresponding joint (19) of the male matrix support.

In light of the above, following insertion of the body (18', 18'') into the receiving volume (23), a chamber is formed (30).

In accordance with the invention, given the above, means (25) are included adapted to generate, in said chamber (30), that blowdown or vacuum condition whereby said attractive force is generated, which leads said body (18', 18'') to penetrate the receiving volume (23) bringing the joints of the male matrix support to connect with the complementary joints of the female matrix support.

The invention is now described with reference to the accompanying drawings in one or more preferred embodiments.

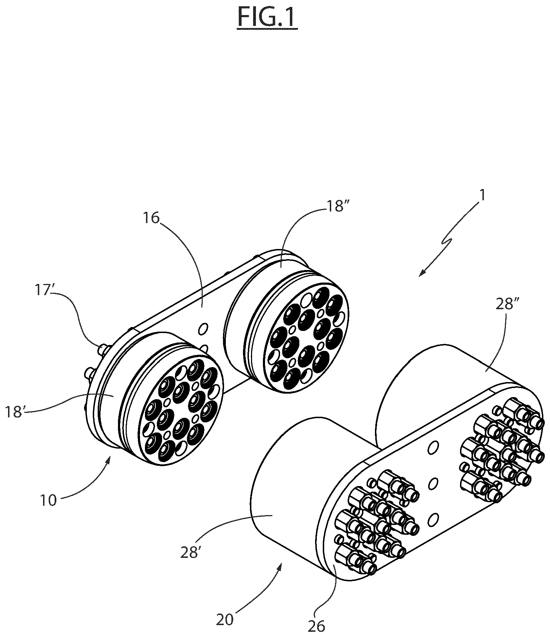

Figure 1 shows in an axonometric view the joint system 1 in accordance with the invention in a first possible embodiment.

In this first preferred embodiment, therefore, such a joint system 1 consists of a male structure 10 supporting one or more joints and a female structure 20 also supporting one or more joints. The female structure mates with the male structure creating the connection between the joints.

More specifically, Figure 1 shows that the male structure 10 envisages one or more support matrices (18', 18'') of a male type. The female 20 structure also includes one or more female (28', 28'') support matrices that couple with the male type support matrices.

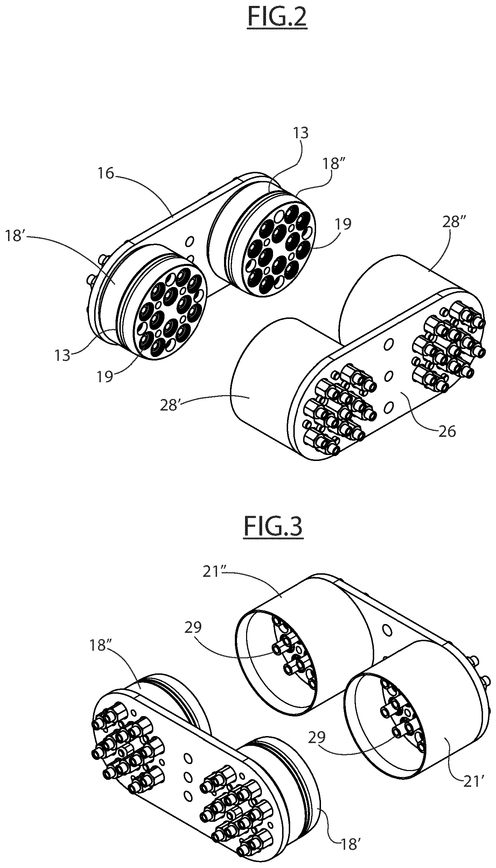

More specifically, as e.g. shown in Figure 1 or Figure 2, a support plate 16 is provided to which two male support matrices (18', 18'') are attached and arranged spaced out from each other.

The male structure 10, therefore, comprises such a support plate 16 supporting one or more male support matrices and, similarly, the female structure 20 comprises its own support plate 26 supporting one or more female support matrices.

The two male support matrices are preferably circular in shape, resulting in two cylindrical bodies rising from plate 16.

Obviously, any other form of such male support matrices is feasible and therefore not only cylindrical.

A male or female support matrix, regardless of its cylindrical or other shape, is a support structure that supports one or a plurality (preferably a plurality) of joints (19, 29).

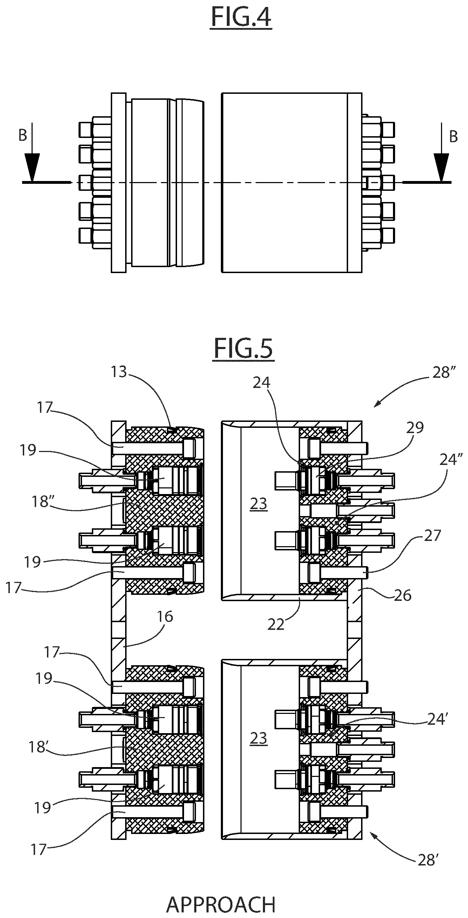

In fact, if we look at the section in Figure 5, the two male support matrices (18') and (18'') are highlighted in cross-section that connect to plate 16 and that are therefore in the form of a block (or body, as it may be) of material, within which the seats in which the joints 19 are arranged are obtained.

The construction material of the body (18', 18'') is generally metal, but construction in other materials, such as plastic, is not excluded.

Reference number 17 shows the fixing screws that are used to connect each male support matrix (18', 18'') to plate 16, as clearly shown in the section of Figure 5.

As mentioned above, in the same manner, the other two female support matrices (28', 28'') connect to the other plate 26, via appropriate means of connection as exactly indicated for the male matrix supports (e.g. screws 27 and the like).

The male support matrices with respect to plate 16 are in such a configuration and arrangement that they can be perfectly matched to the other female support matrices (28', 28'') with respect to plate 26.

When coupled, as mentioned above, the relevant joints connect to each other with a coupling that creates a leak-free passage for fluids (e.g. gas or liquid), i.e. with no or very little leakage.

Going into greater structural detail of the invention, it should be appreciated that each support matrix incorporates one or more joints, which can be of male or female type.

For example, Figure 5 shows the male support matrices (18', 18'') that are structured to fit into the female matrix support (28', 28''). The male matrix support (18', 18'') may comprise one or more male and/or female joints that couple with relative one or more female and/or male joints in the female matrix support (28', 28'').

Obviously, a male joint provided in a matrix support must couple and meet a corresponding female joint provided in the other matrix support.

It is therefore clear that, on the whole, the matrix supports must be such that, when they couple, each joint of one type faces another joint of another type with which it can couple, creating a tight coupling and continuity for the fluid pathway (in case of joints connecting pathways for fluids such as gas, e.g. air, or liquid).

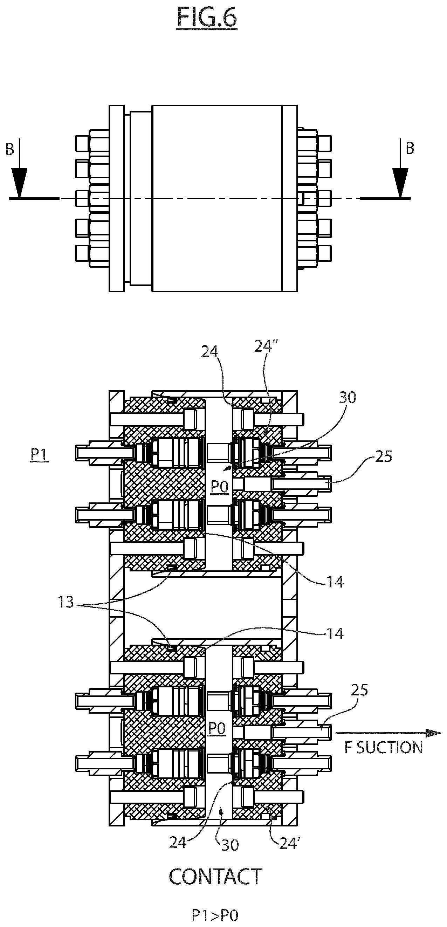

Thus, by coupling a male matrix support with a female matrix support, all joints in them are automatically coupled together (see e.g. section in Figure 6 - CLOSURE).

That being said, going into greater descriptive detail of the invention and for example referring still to Figure 5, the female matrix support (28', 28'') is preferably generally cup shaped and thus each cup comprises a wall 22, preferably cylindrical, rising from the plate 26.

Wall 22 preferably stands upright with respect to plate 26.

This forms a containment volume 23 (or receiving volume as it may be) of the cup, e.g. cylindrical, adapted to accommodate the male matrix support (18', 18'') inside it (also cylindrical, for example).

The bottom of the cup is delimited by base 24, which base 24 is the upper surface of the body (24', 24'') within which the complementary joints are fixed. This body (24', 24''), similarly to the body (18', 18''), connects to its own plate 26.

It is clear that in the configuration described above, as already mentioned, two male matrix supports are provided penetrating two corresponding female matrix supports both of which are cup-shaped to receive the male matrix supports.

It is clear, however, that, for example, a single male matrix support could be provided that fits into a single female matrix support. Each matrix support can then support (i.e. include or comprise) one or more joints.

The configurations shown in the Figures with two male and two female matrix supports are therefore intended as a preferred but not limiting example.

As mentioned, the shape of the matrix support should also not be considered as limiting. Although a cylindrical form of the male matrix support is preferred, therefore mating with a corresponding cylindrical cup-shaped female matrix support, other planforms such as rectangular, square, triangular etc. are not excluded.

For example, a male matrix support with a square or rectangular planform that fits into a cup with a corresponding square or rectangular receiving shape.

Furthermore, not only can the male and female matrix supports have any geometric shape, but they can support joints (male and/or female) in any number, i.e. one or more than one on the sole condition that, of course, a male joint provided in one matrix support corresponds to a female joint provided in the other matrix support such that, when the two matrix supports couple, the coupling of the joints is automatically achieved.

In addition, the matrix joints may be pressurized or blown down fluidic joints, as in the case depicted (thus allowing gas or liquid to pass through), but also joints of the electrical type consisting of sockets and plugs for power and control signals or signals of thermocouples or optical fibres. In this case, therefore, the couplings connect an electrical or power line or electrical, optical, etc. signals.

Returning, therefore, to Figure 5 and referring to the description of a single female matrix support (the second is, as said, identical to the first), we have already mentioned that wall 22 rises from plate 26, preferably vertically, with wall 22 forming a containment volume 23.

The cylindrical shape of wall 22 occurs if the male support matrix is in the form of a cylindrical body.

Otherwise, as mentioned, if the male support matrix has a square planform (or other form), wall 22 follows the same planform to accommodate the male inside volume 23 with a perfect shape fit.

Still referring to Figure 5, the containment volume 23 is bounded by sidewall 22 and below by base 24.

The base 24 represents the upper surface of the filler body (24', 24'') arranged within the cup 22 and thus the material where, similarly to the male support, the seats for fastening/applying the joints are formed and with this filler body fixed to the plate 26 by means of screws 27 (see, for example, Figure 5 again).

Again, similar to the body (18', 18'') the filler body (24', 24'') of the cup is preferably made of metal, or other materials such as plastic.

Returning, for example, to Figure 2 or Figure 3, it can be seen that the two male matrix supports (18', 18'') are provided around their outer perimeter with at least one circular seal 13 (i.e. a gasket ring).

This seal is also well shown in the sections from Figure 5 onwards and its function is to create a fluid-tight seal following the coupling of the male support with the female support.

For example, Figure 6 shows how, following contact and thus penetration of the male matrix support into the corresponding female matrix support, the coupling occurs with a certain degree of mechanical interference due precisely to the gasket that ensures a perfect seal, i.e. prevents fluid (i.e. gas and/or liquid) leakage around the contact perimeter between the male and female elements.

This aspect is important as it ensures a tight fit, in fact creating, as shown in Figure 6, a sealed chamber 30.

Chamber 30, in fact, is formed during the approaching motion of the male support within the female one when the end of the male support (i.e. the end of the body (18', 18'') ) engages within the cup.

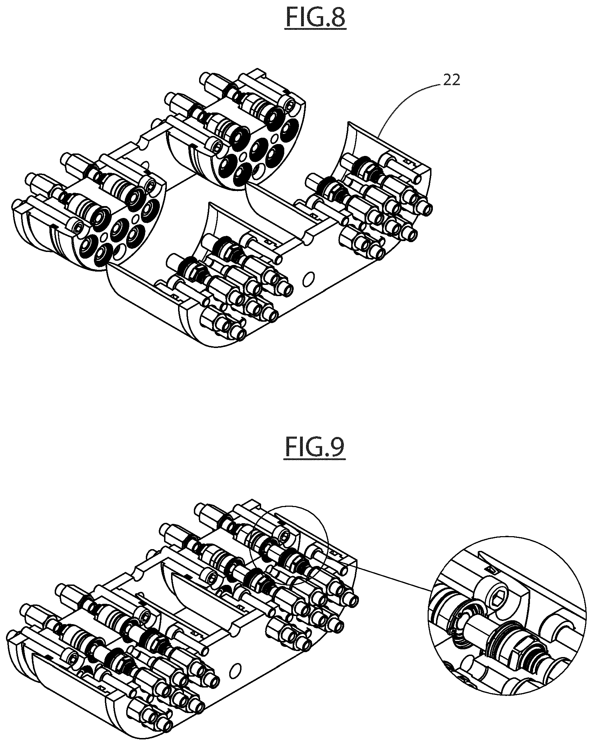

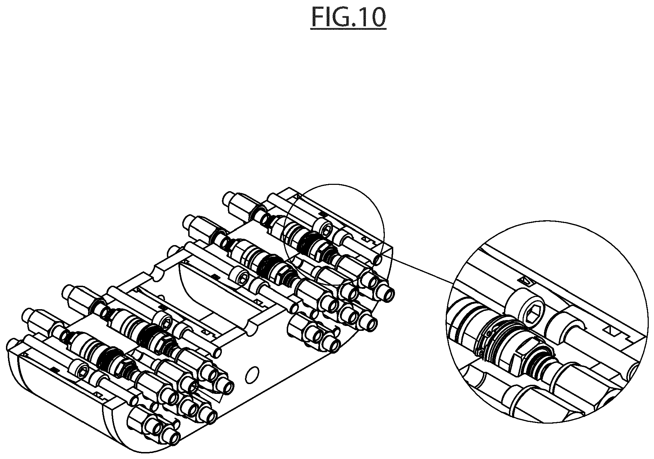

This is followed by a continued penetration until the joints are coupled, thus effectively zeroing the volumetric dimension of said chamber 30 (see in this regard the coupling sequence of Figures 5 through 7 and/or equally the sequence of Figures 8 through 10).

Chamber 30, regardless of its volumetric size, which varies during the coupling motion, is still bounded by:
- By the front surface 14 with respect to the body (18', 18") of the male matrix support (see e.g. Figure 6) ;
- By surface 24 with respect to the body of the female matrix support;
- By a portion of the sidewall 22 still of the female matrix support, which in fact wraps and engages around the body (18', 18").

In accordance with the invention, such a chamber 30 that is generated as a result of coupling is kept in a blown down condition.

It is therefore kept at lower pressure values (P0) than the pressure values (P1) outside the chamber itself, i.e. the pressure value relative to the surrounding environment where the two supports 10 and 20 are immersed and operating.

The blowdown or vacuum condition is therefore to be understood as a condition in which the pressure in chamber 30 is kept at a lower value than the pressure outside chamber 30, in particular the pressure of the environment in which the matrix supports are immersed. The pressure delta generated between chamber 30 and the exterior of chamber 30 is such that it generates a force that promotes coupling.

The value of such an ideal pressure delta for a coupling may vary depending on the joint materials and overall dimensions, as it must be required to overcome the elastic resistance forces of the mating joints.

If, for example, the entire system outside chamber 30 operates in an environment at a certain pressure, e.g. atmospheric pressure or higher values as in autoclaves, chamber 30 must find itself below these pressure values, which may also correspond to a vacuum condition.

If, for example, the entire system outside chamber 30 operates in an environment at pressures significantly higher than atmospheric pressure (e.g. underwater or otherwise in a high-pressure environment), chamber 30 must find itself below these pressure values, which may also correspond to or even exceed atmospheric pressure, provided that a pressure delta (difference between pressure outside chamber 30 and inside chamber 30) is generated adapted to generate a sufficient coupling force.

One skilled in the art will easily be able to best size the pressure delta condition values to be generated between chamber 30 and the exterior (i.e. create a certain blowdown condition in chamber 30) according to own needs and depending on the materials, joint sizes and operating environments.

The difference between the external pressure (P1 in Figure 6 indicating the pressure of the surrounding environment where the two structures male 10 and female 20 are immersed) and the internal pressure of the chamber (P0 again in Figure 6 with P1>P0) should generate a coupling thrust greater than the elastic force that the sum of the individual joints exerts as repulsive force. That is, the front surface area of the chamber must be such that the pressure delta multiplied by this surface area is greater than the repulsive forces of the joints.

The blowdown condition of chamber 30 can be easily achieved by means of a duct passing through the entire cross-section of the matrix support.

In particular, Figure 6, as well as the other Figures, shows a duct 25 running from plate 26 through the entire thickness of the material where the joints are inserted to face the surface 24 (and thus chamber 30). Duct 25 then passes entirely through plate 26 to face into the volume 23 of the cup and thus emerge from surface 24.

Duct 26 could pass into the chamber from anywhere else, e.g. through wall 22, and thus not just limited to the passage shown in the Figures.

For example, it could even be obtained through the male matrix support.

Conversely, the other male matrix support consisting of the material (18', 18'') forming the block in which the seats for attaching the joints are cut is devoid of air passage holes except for those used by screws 17 and joints 19.

In brief, this creates a sealed chamber 30 bounded by surface 14, surface 24 facing surface 14 and part of surface 22 to the side.

Leakage of fluid, e.g. gas such as air, is extremely reduced if not eliminated by gasket 13 following the coupling of the male and female components.

The vacuum or blowdown condition is therefore generally achieved by connecting duct 25 to a vacuum system, e.g. a suction pump or the like, which is well known in the state of the art.

Such a vacuum system is, however, generally present in the tyre vulcanisation process and is more easily applied here, but could be represented by a vacuum system exclusively created for management and control of the joint itself.

Duct 25, which connects to the blowdown generation device, is shown for the female matrix support, but it should be appreciated that it could equally well be realised on the male matrix support.

The inventive concept is therefore based on creating a male matrix support that can integrate one or more joints, including standard and commercial ones, and that mates with a female matrix support that, likewise, integrates one or more joints, including standard and commercial ones, that couple with those provided in the male matrix support.

The coupling step of the male matrix support with the female matrix support creates a chamber 30 which is leak-tight or substantially leak-tight meaning that fluid leakage is minimised or nil.

In this way, if a vacuum or otherwise blown down condition is created in chamber 30 relative to the environment outside the chamber (i.e. a pressure drop), this is maintained as leakage is minimised or nil.

The vacuum or blown down condition, i.e. the pressure difference between the exterior and the chamber, therefore creates a suction force that tends to bring the two matrix supports closer together, creating an attraction force that not only couples the two supports together but also keeps the coupling stable.

The blowdown in the chamber is achieved by creating an access to chamber 30 that connects to a vacuum creating system.

Such access to chamber 30 is preferably achieved by means of a channel penetrating from the outside within the volume of the cup with respect to the female matrix support.

Obviously, as mentioned above, the opposite is possible, i.e. such a channel could be obtained in the same manner in the body (18', 18'') with respect to the male matrix support instead of the female and/or in any position in the male and/or female supports as long as it is adapted to intercept chamber 30.

In all cases, as a result of coupling the male matrix support with the female matrix support, such a chamber 30 is created, which is brought into a blown down or vacuum condition by means of a suction duct that has access to this formed chamber 30 from the outside.

A system for generating vacuum or blowdown, e.g. a suction system, is therefore connected to duct 25, which are in themselves well known in the state of the art and therefore need no further explanation. The person skilled in the art will be able to select the best suited device.

In all the configurations described, gasket 13 may of course be provided not on the male element but around the wall 22 defining the receiving volume 23.

A combination of gaskets on both the bodies (18', 18'') and the wall (22) is equally feasible.

Having described the invention structurally, we now turn to an operation description.

The coupling between the joints is carried out and maintained by exploiting a blowdown or vacuum condition, i.e. by creating a pressure differential between the external environment where the two matrix supports are immersed and chamber 30 that is formed as a result of their coupling.

A pressure condition P0 of chamber 30 is thus created, which is at a lower value than the pressure P1 outside chamber 30.

Given the solution of two male matrix supports (18', 18'') (the same applies in the case of a single male matrix support or any number of male matrix supports), these are each coupled with the corresponding female matrix support.

The step in Figure 5 shows an approach step in which the male support with its relevant joints is spaced and separated from the female matrix support (step referred to in Figure 5 as the approach step).

During the approach there will come a point of contact where the male element starts to penetrate the female cup-shaped support and this step is indicated in Figure 6 as 'contact'.

At this stage, as mentioned, a sealed chamber 30 is created, which is formed exactly following said coupling.

Sealing is ensured, for example, by the described gasket 13 (one or more than one).

Already during the approach step or immediately following contact, through duct 25 in Figure 6, a suction is created by, for example, connecting said duct 25 to a vacuum pump or other well-known systems or devices designed to cause a certain blowdown (i.e. a predetermined pressure value in an environment), which can be adjusted to desired values.

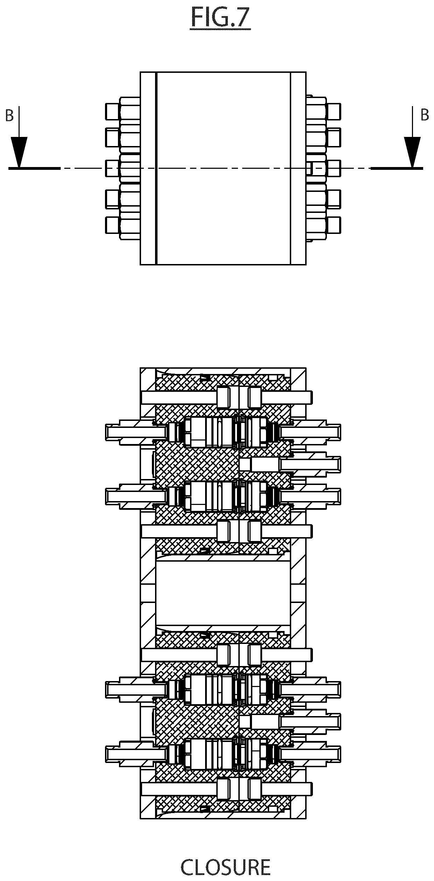

The blowdown created in chamber 30 causes an attraction force that tends to bring the male support matrix towards the female support matrix, thus resetting the volume of chamber 30 to zero and bringing the two matrices into a fully coupled condition, e.g. as shown in Figure 7.

Essentially, chamber 30 is in a blowdown condition relative to the surrounding environment where the two structures (10, 20) are immersed, resulting in a force of attraction between the two components (10, 20) as they approach each other.

This blown down connection system creates a precise and stable connection without the need for mechanical means of connection and ensures a stable seal for as long as the blown down state is maintained.

The same coupling sequence is shown in the steps depicted in Figures 8 through 10.

Decoupling occurs simply by terminating the vacuum condition and thus the suction occurring through duct 25.

The present invention can advantageously be used in the tyre manufacturing field, in particular in the vulcanisation process where male matrix supports couple with female matrix supports, allowing multiple joints to be connected simultaneously through vacuum or depressurisation (or blowdown or blown down state as the case may be).

In this way, the connection is fast and stable and therefore there is no risk of a drop in the vacuum condition of the casings within which the tyres are set.

The use of a joint system as described herein for tyre vulcanisation is therefore described.

It should of course be understood that what is described is applicable to any technical field and not only to tyre vulcanisation and/or retreading in general.

Another area in which the device finds application benefit is in the connection of fluid and/or electrical pathways in a submarine environment where a reliable coupling in dry chambers must be guaranteed.

It also finds beneficial application in the area of quick connection to cooling and/or charging systems for electric vehicles or extrusion dies.

In short, it finds advantageous application in all cases where a quick and precise self-coupling joint is desired.

In the specific field of tyres, the described system finds wide industrial applicability in tyre tread regeneration with a method that briefly follows these steps:
- Applying a tread around the body of a tyre.
   For example, the tyre body can be a used tyre that has been cleaned of its old tread and therefore needs to be retreaded with new tread, or a new body to which a new tread is to be applied in any case in order to form a completely new (and therefore not retreaded) wheel.
- This is followed by the application of a casing that wraps around the tyre body with the tread applied around said tyre body;
- Inserting in an autoclave to vulcanise the casing that surrounds the tyre body and tread placed around it;
- And in which the casing is placed in a blown down condition relative to the pressure inside the autoclave, with the vulcanisation process taking place in the autoclave;
- In accordance with the invention, said creation of a blowdown condition within the enveloping casing is achieved by providing the casing with a matrix support such as a male (or female) type of those described in accordance with the invention and connecting it to a female (or male) matrix support as previously described and converging to a vacuum system.

It is now possible to generate blowdown in the enclosure volume through said vacuum system, e.g. a vacuum pump.

Preferably, the same vacuum pump already in use in the autoclave to generate the casing vacuum (or other system to generate a vacuum), or other specific pump (or other system to generate a vacuum), is used during the coupling of the two matrix supports thus creating a vacuum in chamber 30 with respect to the autoclave environment where the two matrix supports are immersed and which causes said two matrix supports to couple and remain coupled throughout the autoclave vulcanisation process.

In this way, coupling is precise and fast.

In addition, advantageously, the same vacuum pump as that of the autoclave can be used, which is thus connected to the piping that converges to a matrix support and in particular to the matrix support that connects to the casing.

By actuating this vacuum, the vacuum that automatically leads to the coupling of the matrix supports to each other is first created, and then once the coupling is completed through connection of the joints, the vacuum in the enclosures is generated and maintained while guaranteeing the tightness of the joint coupling.

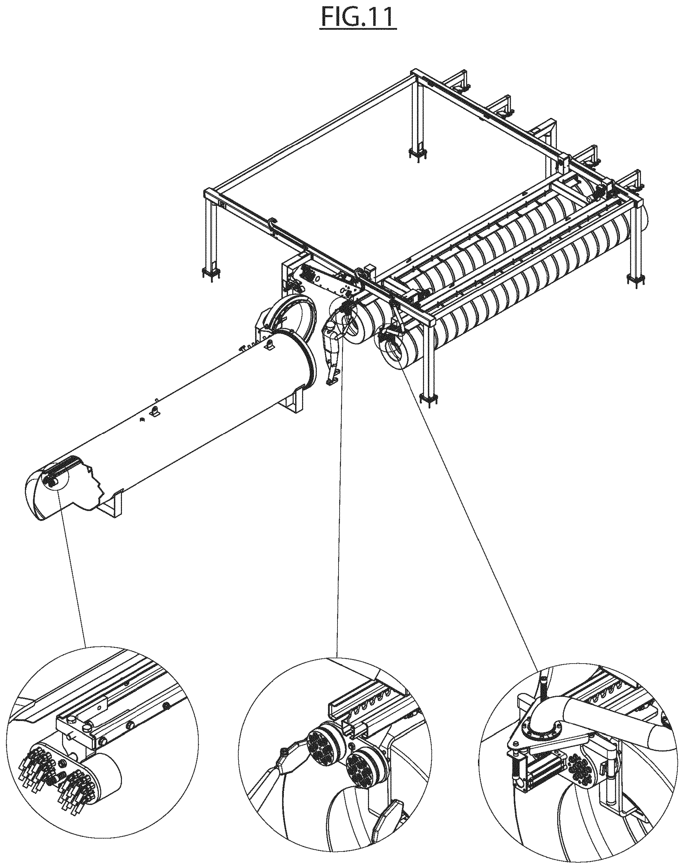

Figure 11 shows an overall view of the autoclave with said joint system integrated into it where, in the example of Figure 11, a female matrix support (it could also be male) is placed inside the autoclave which mates with the male matrix support (it could also be female) on the sliding beam which then enters the autoclave to mate, as described, with the other support.

In all the described configurations of the invention, in the case of joints for the passage of a vacuum gas such as air, these are preferably of the sealed type.

Particularly in the field of autoclave tyre production, as mentioned above, sealed joints may be used.

This implies the presence of a valve in one of the two joints and with this valve being held in the closed position, e.g. by a spring. The valve can, for example, be a spherical body. When a joint and its complementary joint are engaged with each other, the engagement itself leads to the displacement of the obstructing body (i.e. the valve, e.g. the ball), thus leading to an opening of the valve and thus of the fluidic path while, when the disconnection between the joints is complete, the valve returns to obstructing the fluidic path, thus making the joint tight. As described so far, it should be appreciated that the blowdown or vacuum generates a coupling force between the joints that can overcome the resistance of the valve by bringing it into the open position.

In all of the described configurations of the invention, the male matrix support and/or female matrix support may be wholly or partly made of, for example, aluminium or steel.

## Claims

1. A joint system comprising at least one male matrix support (18', 18'') and at least one female matrix support (28', 28''), said male matrix support comprising at least one joint (19) and said female matrix support comprising at least one complementary joint (29) adapted to couple to said joint (19) of said male matrix support, said male matrix support being configured to couple with said female matrix support such that following said coupling the at least one joint (19) provided in said male matrix support connects to the at least one complementary joint (29) provided in the female matrix support;
- Said male matrix support comprising at least one body (18', 18'') rising from a surface (16) and wherein said body (18', 18'') is provided with said one or more joints (19);
- Said female matrix support forming a receiving volume (23) to receive said body (18', 18'') and wherein one or more complementary joints (29) are arranged in said receiving volume (23) adapted to connect, each one, with a corresponding joint (19) of the male matrix support;
- And wherein, following insertion of the body (18', 18") into the receiving volume (23), a chamber (30) is formed;
- **Characterised in that** means (25) are comprised and adapted to generate, in said chamber (30), a blowdown (P0) or vacuum (P0) condition such that a force is generated which leads said body (18', 18'') to penetrate the receiving volume (23) bringing the joints of the male matrix support into connection with the complementary joints of the female matrix support.

2. The system according to claim 1, wherein said means (25) comprise at least one duct (25) which faces said chamber (30) and through which said blowdown or vacuum condition can be generated; preferably wherein said means (25) further comprise a device adapted to generate a blowdown or vacuum condition and adapted to connect to said at least one duct (25), for example a vacuum pump.

3. The system, according to one or more of the preceding claims, in which said chamber (30) is sealed so as to have no or minimal fluid leakage.

4. The system, according to one or more of the preceding claims, in which body (18', 18'') comprises at least one annular gasket arranged around the perimeter of the body that contacts the sidewall (22) of the female matrix support in the penetration step, so that no or minimal fluid leakage occurs.

5. The system, according to one or more of the preceding claims, in which the body (18', 18") rises from a plate (16) to which it is connected.

6. The system, according to one or more of the preceding claims, in which the sidewalls (22) of the female matrix support rise from a plate (26).

7. The system, according to one or more of the preceding claims, in which the body (18', 18'') is cylindrical and the receiving volume (23) shapes a cylindrical receiving volume adapted to receive the cylindrical body (18', 18'').

8. The system, according to any one or more of the preceding claims, wherein said female matrix support has a cup-like shape so as to form said receiving volume (23) bounded by a base (24) of said cup and the sidewall (22) of said cup.

9. The system, according to one or more of the preceding claims, in which the base (24) belongs to a body (24', 24'') within which one or more complementary joints are arranged.

10. The system, according to one or more of the preceding claims, in which the base (24) belongs to a body (24', 24'') within which the said at least one duct (25) is obtained.

11. The system, according to one or more of the preceding claims, wherein said chamber (30) is bounded at least by the front surface (14) of said body (18', 18"), by said base (24) and by a sidewall (22).

12. The system, according to one or more of the preceding claims, in which said base (24) provides one or more holes facing the receiving volume (23) and within which said one or more complementary joints are provided.

13. The system, according to one or more of the preceding claims, in which said receiving volume (23) is bounded by at least one sidewall (22) and at least one base (24).

14. A method for connecting at least one male joint with at least one female joint, comprised in a joint system according to any of claims 1 to 13, the method comprising the following steps:
- Arranging at least one male matrix support (18', 18'') comprising at least one body (18', 18") rising from a surface (16) and in which one or more joints (19) are arranged in said body (18', 18'');
- Arranging at least one female matrix support, preferably having a cup-like shape, said female matrix support forming a receiving volume (23) adapted to receive said body (18', 18'') during coupling, within said receiving volume one or more complementary joints (29) being provided adapted to connect, each one, with a relative joint (19) of the male matrix support, when said body (18', 18'') penetrates said receiving volume (23);
- And wherein the method provides the steps of:
- Penetration of the body (18', 18'') into the receiving volume (23) in such a way as to cause, as a result of said penetration, the formation of a chamber (30);
- **Characterised in that** the method provides the generation of a blowdown (P0) or vacuum condition (P0) in said chamber (30) in such a way as to create a force that causes the body (18', 18'') to penetrate the receiving volume to the point where said joints couple with the complementary joints.

15. The use of a blowdown (P0) or vacuum condition (P0) in a joint system according to any of claims 1 to 13, for the connection of pipes and/or electrical power and/or control connections, the principle of inserting and maintaining the connection of which is based on the creation of a blowdown or vacuum condition within a chamber (30) of the joint system containing the coupling joints, thus causing a pressure drop between the outside of the chamber and the chamber itself, and therefore generating a coupling force bringing the coupling joints in a coupling condition.

## Patentansprüche

1. Gelenksystem, umfassend mindestens einen männlichen Matrixträger (18', 18") und mindestens einen weiblichen Matrixträger (28', 28"), wobei der männliche Matrixträger mindestens ein Gelenk (19) umfasst und der weibliche Matrixträger mindestens ein komplementäres Gelenk (29) umfasst, das angepasst ist, um mit dem Gelenk (19) des männlichen Matrixträgers zu koppeln, wobei der männliche Matrixträger konfiguriert ist, um mit dem weiblichen Matrixträger so zu koppeln, dass nach dem Koppeln das mindestens eine Gelenk (19), das in dem männlichen Matrixträger bereitgestellt ist, mit dem mindestens einen komplementären Gelenk (29), das in dem weiblichen Matrixträger bereitgestellt ist, verbunden wird;
- Der männliche Matrixträger umfasst mindestens einen Körper (18', 18"), der sich von einer Oberfläche (16) erhebt, und wobei der Körper (18', 18") mit dem einen oder den mehreren Gelenken (19) versehen ist;
- Wobei der weibliche Matrixträger ein Aufnahmevolumen (23) bildet, um den Körper (18', 18") aufzunehmen, und wobei ein oder mehrere komplementäre Gelenke (29) in dem Aufnahmevolumen (23) angeordnet sind, die jeweils mit einem entsprechenden Gelenk (19) des männlichen Matrixträgers verbunden werden können;
- Und wobei nach der Einführung des Körpers (18', 18") in das Aufnahmevolumen (23) eine Kammer (30) gebildet wird;
- **Dadurch gekennzeichnet, dass** Mittel (25) umfasst und angepasst sind, um in der Kammer (30) einen Abblas- (P0) oder Vakuum- (P0) -Zustand zu erzeugen, so dass eine Kraft erzeugt wird, die den Körper (18', 18") dazu bringt, das Aufnahmevolumen (23) zu durchdringen, wodurch die Gelenke des männlichen Matrixträgers in Verbindung mit den komplementären Gelenken des weiblichen Matrixträgers gebracht werden.

2. System nach Anspruch 1, wobei die Mittel (25) mindestens eine Leitung (25) umfassen, die der Kammer (30) zugewandt ist und durch die der Abblas- oder Vakuumzustand erzeugt werden kann; vorzugsweise umfassen die Mittel (25) ferner eine Vorrichtung, die angepasst ist, einen Abblas- oder Vakuumzustand zu erzeugen, und die angepasst ist, an die mindestens eine Leitung (25) verbunden zu werden, zum Beispiel eine Vakuumpumpe.

3. System nach einem oder mehreren der vorhergehenden Ansprüche, wobei die Kammer (30) so abgedichtet ist, dass keine oder nur eine minimale Flüssigkeitsleckage auftritt.

4. System nach einem oder mehreren der vorhergehenden Ansprüche, wobei der Körper (18', 18") mindestens eine ringförmige Dichtung umfasst, die um den Umfang des Körpers herum angeordnet ist, der die Seitenwand (22) des weiblichen Matrixträgers im Durchdringungsschritt berührt, so dass keine oder eine minimale Flüssigkeitsleckage auftritt.

5. System nach einem oder mehreren der vorhergehenden Ansprüche, wobei sich der Körper (18', 18") von einer Platte (16) erhebt, mit der er verbunden ist.

6. System nach einem oder mehreren der vorhergehenden Ansprüche, wobei sich die Seitenwände (22) des weiblichen Matrixträgers von einer Platte (26) erheben.

7. System nach einem oder mehreren der vorhergehenden Ansprüche, wobei der Körper (18', 18") zylindrisch ist und das Aufnahmevolumen (23) ein zylindrisches Aufnahmevolumen bildet, das dazu angepasst ist, den zylindrischen Körper (18', 18") aufzunehmen.

8. System nach einem oder mehreren der vorhergehenden Ansprüche, wobei der weibliche Matrixträger eine becherartige Form aufweist, um das Aufnahmevolumen (23) zu bilden, das durch eine Basis (24) des Bechers und die Seitenwand (22) des Bechers begrenzt ist.

9. System nach einem oder mehreren der vorhergehenden Ansprüche, wobei die Basis (24) zu einem Körper (24', 24") gehört, in dem ein oder mehrere komplementäre Gelenke angeordnet sind.

10. System nach einem oder mehreren der vorhergehenden Ansprüche, wobei die Basis (24) zu einem Körper (24', 24") gehört, in dem die mindestens eine Leitung (25) erhalten wird.

11. System nach einem oder mehreren der vorhergehenden Ansprüche, wobei die Kammer (30) zumindest durch die Vorderfläche (14) des Körpers (18', 18"), durch die Basis (24) und durch eine Seitenwand (22) begrenzt ist.

12. System nach einem oder mehreren der vorhergehenden Ansprüche, wobei die Basis (24) ein oder mehrere Löcher bereitstellt, die dem Aufnahmevolumen (23) zugewandt sind, und in dem die eine oder mehreren komplementären Gelenke bereitgestellt sind.

13. System nach einem oder mehreren der vorhergehenden Ansprüche, wobei das Aufnahmevolumen (23) durch mindestens eine Seitenwand (22) und mindestens eine Basis (24) begrenzt ist.

14. Verfahren zum Verbinden mindestens eines männlichen Gelenks mit mindestens einem weiblichen Gelenk, das in einem Gelenksystem nach einem der Ansprüche 1 bis 13 enthalten ist, wobei das Verfahren die folgenden Schritte umfasst:
- Anordnen mindestens eines männlichen Matrixträgers (18', 18"), der mindestens einen Körper (18', 18") umfasst, der sich von einer Oberfläche (16) erhebt und in dem ein oder mehrere Gelenke (19) in dem Körper (18', 18") angeordnet sind;
- Anordnen mindestens eines weiblichen Matrixträgers, der vorzugsweise eine becherartige Form aufweist, wobei der weibliche Matrixträger ein Aufnahmevolumen (23) bildet, das angepasst ist, um den Körper (18', 18") während des Koppelns aufzunehmen, wobei innerhalb des Aufnahmevolumens ein oder mehrere komplementäre Gelenke (29) bereitgestellt sind, die angepasst sind, um sich jeweils mit einem relativen Gelenk (19) des männlichen Matrixträgers zu verbinden, wenn der Körper (18', 18") das Aufnahmevolumen (23) durchdringt;
- Und wobei das Verfahren die folgenden Schritte bereitstellt:
- Eindringen des Körpers (18', 18") in das Aufnahmevolumen (23) derart, dass infolge der Eindringung die Bildung einer Kammer (30) herbeigeführt wird;
- **Dadurch gekennzeichnet, dass** das Verfahren die Erzeugung eines Abblas- (P0) oder Vakuumzustands (P0) in der Kammer (30) derart vorsieht, dass eine Kraft erzeugt wird, die bewirkt, dass der Körper (18', 18") das Aufnahmevolumen bis zu dem Punkt durchdringt, an dem sich die Gelenke mit den komplementären Gelenken koppeln.

15. Verwendung eines Abblas- (P0) oder Vakuumzustands (P0) in einem Gelenksystem nach einem der Ansprüche 1 bis 13 für die Verbindung von Rohrleitungen und/oder elektrischen Leistungs- und/oder Steuerverbindungen, dessen Prinzip der Einführung und Aufrechterhaltung der Verbindung auf der Erzeugung eines Abblas- oder Vakuumzustands innerhalb einer Kammer (30) des Gelenksystems, das die Kupplungsgelenke enthält, beruht, wodurch ein Druckabfall zwischen der Außenseite der Kammer und der Kammer selbst verursacht wird und somit eine Kupplungskraft erzeugt wird, die die Kupplungsgelenke in einen Kupplungszustand bringt.

## Revendications

1. Système d'emboîtement comprenant au moins un support de matrice mâle (18', 18") et au moins un support de matrice femelle (28', 28"), ledit support de matrice mâle comprenant au moins un emboîtement (19) et ledit support de matrice femelle comprenant au moins un emboîtement complémentaire (29) adapté pour s'accoupler audit emboîtement (19) dudit support de matrice mâle, ledit support de matrice mâle étant configuré pour s'accoupler avec ledit support de matrice femelle de telle sorte que, suite audit accouplement, l'au moins un emboîtement (19) prévu dans ledit support de matrice mâle se raccorde à l'au moins un emboîtement complémentaire (29) prévu dans le support de matrice femelle ;
- ledit support de matrice mâle comprenant au moins un corps (18', 18") s'élevant à partir d'une surface (16) et ledit corps (18', 18") étant pourvu desdits un ou plusieurs emboîtements (19) ;
- ledit support de matrice femelle formant un volume de réception (23) pour recevoir ledit corps (18', 18") et un ou plusieurs emboîtements complémentaires (29) étant disposés dans ledit volume de réception (23) adapté pour raccorder, chacun, à un emboîtement correspondant (19) du support de matrice mâle ;
- et où, une chambre (30) est formée suite à l'insertion du corps (18', 18") dans le volume de réception (23) ;
- **caractérisé en ce que** des moyens (25) sont compris et adaptés pour générer, dans ladite chambre (30), une condition de soufflage (P0) ou de vide (P0) telle qu'une force soit générée qui conduit ledit corps (18', 18") à pénétrer dans le volume de réception (23) en amenant les emboîtements du support de matrice mâle en raccordement avec les emboîtements complémentaires du support de matrice femelle.

2. Système selon la revendication 1, lesdits moyens (25) comprenant au moins un conduit (25) qui fait face à ladite chambre (30) et par lequel ladite condition de soufflage ou de vide peut être générée ; de préférence, lesdits moyens (25) comprenant en outre un dispositif adapté pour générer une condition de soufflage ou de vide et adapté pour se raccorder audit conduit (25), par exemple une pompe à vide.

3. Système, selon l'une ou plusieurs des revendications précédentes, ladite chambre (30) étant étanche de manière à éviter toute fuite de liquide ou de la réduire au minimum.

4. Système selon l'une ou plusieurs des revendications précédentes, le corps (18', 18") comprenant au moins un joint annulaire disposé autour du périmètre du corps qui entre en contact avec la paroi latérale (22) du support de matrice femelle lors de l'étape de pénétration, de sorte qu'il n'y ait pas de fuite de fluide ou qu'elle soit réduite au minimum.

5. Système, selon l'une ou plusieurs des revendications précédentes, le corps (18', 18") s'élevant à partir d'une plaque (16) à laquelle il est relié.

6. Système, selon l'une ou plusieurs des revendications précédentes, les parois latérales (22) du support de matrice femelle s'élevant à partir d'une plaque (26).

7. Système, selon l'une ou plusieurs des revendications précédentes, le corps (18', 18") étant cylindrique et le volume de réception (23) formant un volume de réception cylindrique adapté pour recevoir le corps cylindrique (18', 18").

8. Système selon l'une ou plusieurs des revendications précédentes, ledit support de matrice femelle ayant une forme de coupelle de manière à former ledit volume de réception (23) délimité par une base (24) de ladite coupelle et la paroi latérale (22) de ladite coupelle.

9. Système, selon l'une ou plusieurs des revendications précédentes, la base (24) appartenant à un corps (24', 24") à l'intérieur duquel sont disposés un ou plusieurs emboîtements complémentaires.

10. Système, selon l'une ou plusieurs des revendications précédentes, la base (24) appartenant à un corps (24', 24") à l'intérieur duquel est obtenu ledit conduit (25).

11. Système, selon l'une ou plusieurs des revendications précédentes, ladite chambre (30) étant délimitée au moins par la surface avant (14) dudit corps (18', 18"), par ladite base (24) et par une paroi latérale (22).

12. Système, selon l'une ou plusieurs des revendications précédentes, ladite base (24) présentant un ou plusieurs orifices faisant face au volume de réception (23) et à l'intérieur desquels sont prévus lesdits un ou plusieurs emboîtements complémentaires.

13. Système, selon l'une ou plusieurs des revendications précédentes, ledit volume de réception (23) étant délimité par au moins une paroi latérale (22) et au moins une base (24).

14. Procédé de raccordement d'au moins un emboîtement mâle avec au moins un emboîtement femelle, compris dans un système d'emboîtement selon l'une quelconque des revendications 1 à 13, le procédé comprenant les étapes suivantes :
- la disposition d'au moins un support de matrice mâle (18', 18") comprenant au moins un corps (18', 18") s'élevant à partir d'une surface (16) et un ou plusieurs emboîtements (19) étant disposés dans ledit corps (18', 18") ;
- la disposition d'au moins un support de matrice femelle, ayant de préférence une forme de coupelle, ledit support de matrice femelle formant un volume de réception (23) adapté pour recevoir ledit corps (18', 18") lors de l'accouplement, à l'intérieur dudit volume de réception étant prévus un ou plusieurs emboîtements complémentaires (29) adaptés pour se raccorder, chacun, avec un emboîtement relatif (19) du support de matrice mâle, lorsque ledit corps (18', 18") pénètre dans ledit volume de réception (23) ;
- et où le procédé comprend les étapes suivantes :
- la pénétration du corps (18', 18") dans le volume de réception (23) de manière à provoquer, suite à ladite pénétration, la formation d'une chambre (30) ;
- **caractérisé en ce que** le procédé permet la génération d'une condition de soufflage (P0) ou de vide (P0) dans ladite chambre (30) de manière à créer une force qui fait pénétrer le corps (18', 18") dans le volume de réception jusqu'au point où lesdits emboîtements s'accouplent avec les emboîtements complémentaires.

15. Utilisation d'une condition de soufflage (P0) ou de vide (P0) dans un système d'emboîtement selon l'une quelconque des revendications 1 à 13, pour le raccordement de tuyaux et/ou de connexions d'alimentation électrique et/ou de commande, dont le principe d'insertion et de maintien du raccordement est basé sur la création d'une condition de soufflage ou de vide à l'intérieur d'une chambre (30) du système d'emboîtement contenant les emboîtements d'accouplement, provoquant ainsi une chute de pression entre l'extérieur de la chambre et la chambre elle-même, et générant par conséquent une force d'accouplement amenant les emboîtements d'accouplement dans une condition d'accouplement.
